(19) Europäisches Patentamt
European Patent Office
Office européen des brevets

(11) **EP 2 193 061 B1**

(12) **EUROPÄISCHE PATENTSCHRIFT**

(45) Veröffentlichungstag und Bekanntmachung des Hinweises auf die Patenterteilung:
**20.07.2011 Patentblatt 2011/29**

(21) Anmeldenummer: **08803940.9**

(22) Anmeldetag: **10.09.2008**

(51) Int Cl.:
*B60W 10/08* (2006.01)          *B60W 20/00* (2006.01)
*B60W 10/10* (2006.01)          *B60K 6/52* (2007.10)
*B60W 10/02* (2006.01)

(86) Internationale Anmeldenummer:
**PCT/EP2008/061973**

(87) Internationale Veröffentlichungsnummer:
**WO 2009/037158 (26.03.2009 Gazette 2009/13)**

(54) **VERFAHREN UND VORRICHTUNG ZUR BEEINFLUSSUNG DER ZUGKRAFT WÄHREND SCHALTVORGÄNGEN EINES SCHALTGETRIEBES BEI FAHRZEUGEN**

METHOD AND DEVICE FOR INFLUENCING THE TRACTION FORCE DURING SHIFTING OPERATIONS OF A MANUAL TRANSMISSION IN VEHICLES

PROCÉDÉ ET DISPOSITIF POUR INFLUER SUR LA FORCE DE TRACTION PENDANT DES PROCESSUS DE CHANGEMENT DE VITESSES D'UNE BOÎTE DE VITESSES MÉCANIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **14.09.2007 DE 102007044005**

(43) Veröffentlichungstag der Anmeldung:
**09.06.2010 Patentblatt 2010/23**

(73) Patentinhaber: **Robert Bosch GmbH**
**70442 Stuttgart (DE)**

(72) Erfinder: **HUBER, Thomas**
**74915 Daisbach (DE)**

(56) Entgegenhaltungen:
**EP-A- 1 327 547          EP-A- 1 393 959**
**DE-A1- 19 919 454          US-A1- 2001 003 109**
**US-A1- 2002 055 411          US-B1- 6 319 168**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Stand der Technik

Die Erfindung geht aus von einem Verfahren bzw. einer Vorrichtung zur Beeinflussung der Zugkraft während Schaltvorgängen eines Schaltgetriebes bei Fahrzeugen mit den Merkmalen des Oberbegriffs der unabhängigen Ansprüche.

Viele Fahrzeuge sind mit zwei Achsen ausgerüstet, wobei meistens nur eine Achse angetrieben wird. Diese Achse ist vielfach mittels eines Schaltgetriebes und einer Kupplung an einen Verbrennungsmotor gekoppelt. Schaltgetriebe haben häufig die Eigenschaft, dass sie lastfrei geschaltet werden müssen. Hierzu wird durch Öffnen der Kupplung der Verbrennungsmotor von dem restlichen Antriebsstrang getrennt. Solange die Kupplung geöffnet ist, kann darüber keine Zugkraft übertragen werden. Das führt dazu, dass während Schaltvorgängen mit einem Schaltgetriebe eine Zugkraftunterbrechung auftritt. Die Zugkraft ist wegen F=m*a ein direktes Maß für die auftretende Fahrzeugbeschleunigung. Ein Zugkrafteinbruch ist daher auch immer ein Einbruch der Fahrzeugbeschleuni-gung. Ein plötzlicher Einbruch oder Anstieg der Fahrzeugbeschleunigung wird von einem Insassen in einem Fahrzeug als Ruck empfunden. Aus der DE 3542059 C1 ist ein Hybridkraftfahrzeugantrieb bekannt, bei welchem die beiden Räder einer Antriebsachse von einem Verbrennungsmotor über ein Übersetzungsgetriebe mit variabler Übersetzung angetrieben werden und die Fahrzeugräder einer anderen Antriebsachse von einem oder mehreren elektrischen Maschinen antreibbar sind.

Aus der gattungsbildenden US 6319 168 ist ein Antriebssystem für ein Hybridfahrzeug bekannt, welches den hohen Wirkungsgrad eines Handschaltgetriebes mit der ruckfreien Arbeitsweise der fortschrittlichsten Automatikgetriebe umfasst, indem ein zweiter Drehmomentweg dazu benutzt wird während Schaltvorgängen ein vom Fahrer angefordertes Drehmoment aufrechtzuerhalten.

Aus der US 2002/055411 ist ein ein Drehmomentregelungsverfahren und ein Drehmomentregelungssystem für ein Hybridfahrzeug, bekannt, bei dem Verbrennungsmotordrehmomentregelungsmittel zeitweise das Drehmoment des Verbrennungsmotors ändern und Schaltsteuerungsmittel die Kupplung öffnen und das Übersetzungsverhältnis ändern, wenn das Getriebe einen Schaltvorgang ausführt.

Aus der DE 199 19 454 ist eine Fahrzeugantriebseinrichtung mit einem Gangwechselgetriebe zwischen einem Fahrantriebmotor und von ihm anzutreibenden Rädern, und mit mindestens einer elektrischen Maschine zur mindestens teilweisen Kompensation von Kraftübertragungslücken während Schaltvorgängen des Gangwechselgetriebes bekannt.

Aus der US-2001/0003109 ist ein Drehmomentübertragungsmechanismus eines Fahrzeugs bekannt, welcher so aufgebaut ist, dass ein Verbrennungsmotordrehmoment auf Vorderräder über ein Getriebe übertragen wird. Mit diesem System kann eine Verringerung des Drehmoments, das von dem Motor/Generator auf die Hinterräder übertragen werden soll, während des Gangwechsels ohne den Bedarf einer zusätzlichen Antriebsquelle unterdrückt werden.

Aus der EP 1327547 ist ein Hybridantriebssystem mit zwei Antriebssträngen (Verbrennungsmotor treibt eine erste Achse an, eine elektrische Maschine treibt eine zweite Achse an) bekannt. Mittels eines Drehzahlsensors wird die Drehzahl der elektrisch angetriebenen Achse bestimmt. Mittels eines Steuergerätes werden die Antriebsaggregate so geregelt, dass eine Drehzahlschwelle nicht überschritten wird.

Aus der EP 1393959 ist ein Hybridantriebssystem mit zwei Antriebssträngen bekannt. Zudem wird ein Verfahren offenbart, bei dem eine Kupplung in Abhängigkeit eines Zielantriebsdrehmomentes angesteuert wird.

Offenbarung der Erfindung

Die vorliegende Erfindung geht aus von einem Verfahren bzw. einer Vorrichtung zur Beeinflussung der Zugkraft während Schaltvorgängen eines Schaltgetriebes bei Fahrzeugen.

Der Kern der Erfindung besteht darin, dass der Schaltkomfort bei Fahrzeugen mit auf unterschiedliche Achsen wirkenden Antriebssystemen gesteigert werden kann. Dies geschieht durch eine wenigstens teilweise Kompensation der Zugkraftunterbrechung, die während eines Schaltvorganges auftritt, wenn ein Antriebssystem durch Öffnen der Kupplung von der Antriebsachse getrennt wird. Hierzu wird mittels der erfindungsgemäßen Vorrichtung ein Antriebssystem an einer weiteren Achse so angesteuert, dass die Zugkraftunterbrechung wenigstens teilweise kompensiert wird. Üblicherweise ist die wirkende Zugkraft vor und nach dem Schaltvorgang unterschiedlich hoch. Beim Schalten in einen höheren Gang wirkt direkt vor dem Schaltvorgang eine höhere Zugkraft als direkt nach dem Schaltvorgang, da die Übersetzung des Getriebes im höheren Gang kleiner ist. Beim Schalten in einen niedrigeren Gang wirkt entsprechend nach dem Schalten eine größere Zugkraft als vor dem Schalten. Der jeweilige Wert der Zugkraft vor und nach dem Schalten wird im Folgenden mit Zugkraftniveau bezeichnet.

Mittels der erfindungsgemäßen Vorrichtung wird somit nicht nur die Zugkraftunterbrechung wenigstens teilweise kompensiert, sondern auch ein Übergang von dem Zugkraftniveau vor dem Schalten zu dem Zugkraftniveau nach dem Schalten realisiert.

Die für die Einstellung der Zugkraftniveaus vor und nach des Schaltungsvorganges benötigten Drehmomente des Antriebssystems werden in der Realität, beispielsweise aufgrund von Totzeiten in den Antriebssystemen, mit einer gewissen zeitlichen Verzögerung eingestellt. Erfindungsgemäß ist daher vorgesehen, dass die Ansteuerung der Kupplung nach einem Schaltwunsch entsprechend verzögert wird, damit ein Ablösen der entsprechenden Drehmomente, oder ein Wechsel der wirkenden Drehmomente an den zwei Antriebsachsen, möglichst ohne Abfall und Anstieg der Fahrzeugbeschleunigung, und insbesondere ohne den damit verbundenen spürbaren Ruck, gewährleistet wird. Durch die in den abhängigen Ansprüchen aufgeführten Maßnahmen sind vorteilhafte Weiterbildungen und Verbesserungen der im unabhängigen Anspruch angegebenen Vorrichtung möglich.

Vorteilhafterweise kann der Verlauf der Zugkraft während den Schaltvorgängen vorgegeben werden. Somit kann beispielsweise der Fahrerwunsch, z.B. ein über ein Fahrpedal angefordertes Drehmoment zur Beschleunigung des Fahrzeuges, unmittelbar umgesetzt werden.

**Neue Seite 3:**

In einer weiteren vorteilhaften Ausgestaltung der Erfindung ist vorgesehen, die Ansteuerung im Sinne einer hohen Fahrzeugbeschleunigung auszuführen. Dadurch kann beispielsweise die Dauer der Beschleunigung bis zur Höchstgeschwindigkeit minimiert werden.

In einer weiteren vorteilhaften Ausgestaltung der Erfindung ist vorgesehen, dass der durch die Zugkraftunterbrechung hervorgerufene Abfall und anschließende Anstieg der Fahrzeugbeschleunigung, und insbesondere der damit verbundene spürbare Ruck, bei Schaltvorgängen minimiert wird, indem man die Steigung des Zugkraftverlaufes zwischen den beiden Zugkraftniveaus minimiert.

In besonders vorteilhafter Weise wird der Verlauf der Zugkraft während des Schaltvorgangs so gesteuert, dass Grenzwerte zur Veränderung der Fahrzeugbeschleunigung nicht überschritten werden.

Eine weitere vorteilhafte Ausgestaltung der Erfindung sieht vor, dass auch während der Schaltvorgänge der Verlauf der Zugkraft in Abhängigkeit vom Fahrerwunsch erfolgt. So kann beispielweise selbst während des Schaltvorganges die Fahrzeugbeschleunigung entsprechend des Fahrerwunsches geregelt werden.

Ausführungsbeispiele der Erfindung sind in den Zeichnungen dargestellt und in der nachfolgenden Beschreibung näher erläutert.

Es zeigen:

Figur 1 eine Vorrichtung zur Beeinflussung der Zugkraft während Schaltvorgängen eines Schaltgetriebes bei Fahrzeugen,

Figur 2 ein Verfahren zur wenigstens teilweisen Kompensation von Zugkraftunterbrechung während Schaltvorgängen bei Fahrzeugen,

Figur 3 einen Zugkraftverlauf während einer Schaltung ohne Kompensation,

Figur 4 einen Zugkraftverlauf während einer Schaltung mit Kompensation.

Ausführungsformen der Erfindung

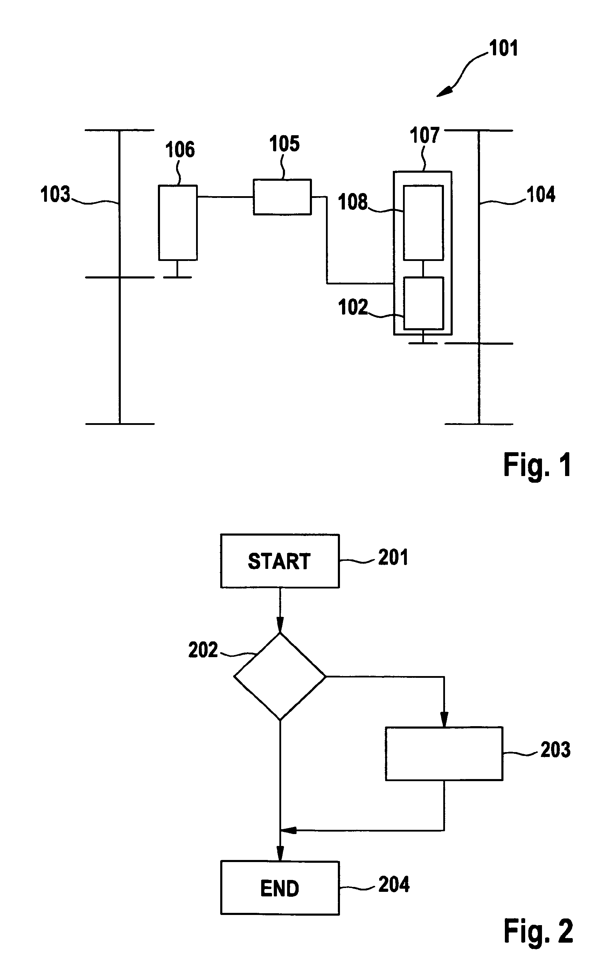

Figur 1 zeigt eine Vorrichtung 105 zur Beeinflussung der Zugkraft während Schaltvorgängen eines Schaltgetriebes 102 bei Fahrzeugen 101. Für das Fahrzeug sind zwei Antriebsachsen 103, 104 vorgesehen. Für die Antriebsachse 103 ist das Antriebssystem 106 vorgesehen. Das Antriebssystem 106 ist in dieser Ausführungsform als eine elektrische Maschine ausgeführt. Für die Antriebsachse 104 ist das Antriebssystem 107 vorgesehen. Dieses besteht in dieser Ausführungsform aus einem Verbrennungsmotor 108 und dem Schaltgetriebe 102. Das Steuergerät 105 ist jeweils mit den Antriebssystemen 106 und 107 elektronisch verbunden, so dass eine bidirektionale Daten- und Signalübertragung möglich ist.

Figur 2 zeigt ein Verfahren zur wenigstens teilweisen Kompensation von Zugkraftunterbrechungen während Schaltvorgängen bei Fahrzeugen. In Verfahrensschritt 202 wird überprüft, ob ein Schaltvorgang ausgeführt werden soll. Wenn kein Schaltvorgang ausgeführt werden soll, endet das Verfahren mit dem Verfahrensschritt 204. Wenn ein Schaltvorgang ausgeführt werden soll, verzweigt das Verfahren zum Verfahrensschritt 203. In Verfahrensschritt 203 wird

- die aktuelle Zugkraft bestimmt
- die Zugkraft nach dem Schaltvorgang berechnet
- ein Zugkraftverlauf für den Übergang von der aktuellen Zugkraft zu der Zugkraft nach dem Schaltvorgang berechnet

Während des Schaltvorganges wird ein weiterer Antrieb so angesteuert, dass dieser gemäß dem berechneten Zugkraftverlauf die durch den Schaltvorgang verursachte Zugkraftunterbrechung kompensiert. Nach Beendigung des Schaltvorganges endet das Verfahren mit dem Verfahrensschritt 204. Die genannten Schritte können zyklisch wiederholt und abgearbeitet werden.

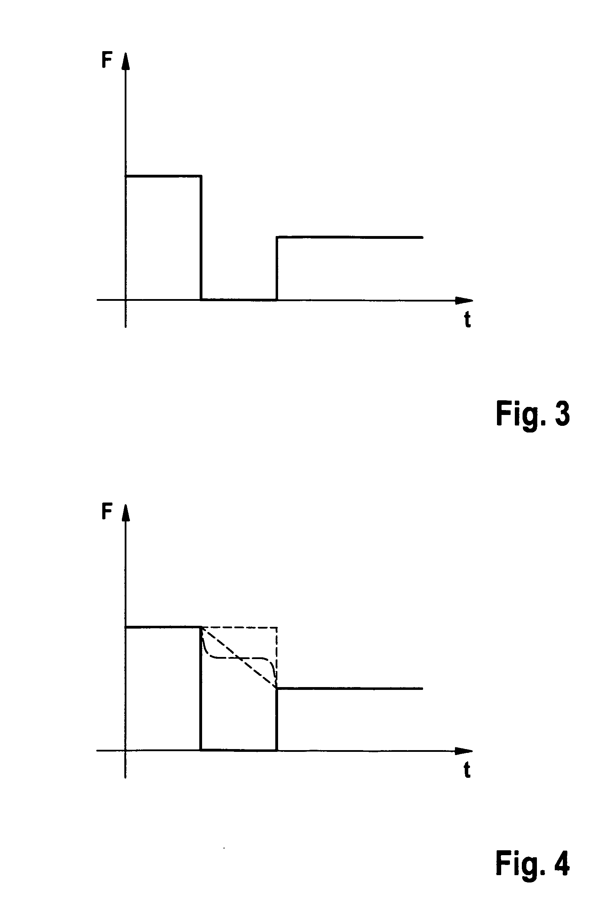

Figur 3 zeigt den Zugkraftverlauf während eines Schaltvorganges ohne Kompensation. In der Darstellung ist die Zugkraft über der Zeit aufgetragen. Vor Beginn des Schaltvorganges befindet sich die Zugkraft auf einem hohen Niveau. Während des Schaltvorganges wird das Antriebssystem mittels einer Kupplung von der Antriebsachse getrennt, so dass keine Zugkraft mehr übertragen werden kann. Nach Beendigung des Schaltvorganges wird die Kupplung wieder geschlossen und es wirkt wieder eine Zugkraft entsprechend des aktuellen Drehmomentes und der Übersetzung des Getriebes.

Im Folgenden gelten die Bezeichnungen:

- $M\_prim$: wirksames Moment primärer Antrieb
- $M\_sec$: wirksames Moment sekundärer Antrieb
- $i\_prim\_old$: effektive Getriebeübersetzung vor der Schaltung
- $i\_prim\_new$: effektive Getriebeübersetzung nach der Schaltung
- $i\_sec$: effektive Übersetzung sekundärer Antrieb
- $F$: resultierende Zugkraft

Für die Zugkraft gilt im Allgemeinen:

$$F=M\_prim*i\_prim+M\_sec*i\_sec,$$

Während Schaltungen ist die Kupplung geöffnet und über den primären Antrieb kann keine Zugkraft übertragen werden. In diesem Fall gilt:

$$F=M\_sec*i\_sec.$$

Die wirksamen Momente sind bestimmt durch den Fahrerwunsch.

Im einfachsten Fall wird die Zugkraft nur durch den primären Antrieb aufgebracht, der sekundäre Antrieb liefert keinen Beitrag. Ebenfalls wird von konstantem Fahrerwunsch und damit auch von konstantem primärem Antriebsmoment im Zeitraum der Schaltung ausgegangen. Die Übersetzungsänderung durch die Schaltung verursacht eine Abweichung der Zugkraft vor und nach der Schaltung. Situation vor der Schaltung:

$$F\_old=M\_prim*i\_prim\_old$$

Situation nach der Schaltung:

$$F\_new=M\_prim*i\_prim\_new$$

Situation während der Schaltung:

$$F\_shift=M\_sec*i\_sec$$

Durch geeignete Wahl des Moments des sekundären Antriebs $M\_sec$ kann die Zugkraft $F\_shift$ während der Schaltung beeinflusst werden.

Für vollständige Kompensation der Zugkraft $F\_old$ während der Schaltung ergibt sich

$$F\_shift=F\_old \text{ und damit } M\_sec=M\_prim*i\_prim\_old/i\_sec.$$

Ist die Zeitdauer t_shift der Schaltung bekannt, kann das sekundäre Antriebsmoment M_sec auch so gewählt werden, dass ein möglichst linearer Übergang zwischen F_old und F_new erreicht wird. Es gilt dann

$$F\_shift(t)=F\_old+t*(F\_new-F\_old)/t\_shift.$$

Daraus kann wiederum M_sec be-rechnet werden:

$$M\_sec(t)=M\_prim*(i\_prim\_old+t/t\_shift*(i\_prim\_new-i\_prim\_old))/i\_sec.$$

Figur 4 zeigt einen Zugkraftverlauf während eines Schaltvorganges mit Kompensation. In der Darstellung ist die Zugkraft über der Zeit aufgetragen. Die durchgezogene Linie beschreibt den Zugkraftverlauf an der Achse, an der das Schaltgetriebe angeflanscht ist. Während des Schaltvorganges kann keine Zugkraft auf diese Achse übertragen werden. Der Verlauf ist vergleichbar dem aus Figur 3. Die strichpunktierte Linie beschreibt den Zugkraftverlauf an der anderen Achse, auf die das andere Antriebssystem wirkt. Während des Schaltvorganges wird dadurch die Zugkraft mindestens teilweise kompensiert. Der Übergang der Zugkraft von dem hohen Niveau vor dem Schaltvorgang zu dem niedrigen Niveau nach dem Schaltvorgang wird durch Ansteuerung des zweiten Antriebssystems erzielt. Je nach Ansteuerung des zweiten Antriebssystems kann ein sprunghafter, linearer oder auch frei wählbarer Übergang realisiert werden.

**Patentansprüche**

1. Vorrichtung (105) zur Beeinflussung der Zugkraft während Schaltvorgängen eines Schaltgetriebes (102) bei Fahrzeugen (101) mit

   • wenigstens zwei Antriebsachsen (103,104),
   • wenigstens einem Schaltgetriebe (102),
   • wobei das Antriebssystem (106) der ersten Achse (103) während der Schaltvorgänge derart angesteuert wird, dass die bei Schaltvorgängen des Schaltgetriebes (102) an der zweiten Achse (104) auftretenden Zugkraftunterbrechungen wenigstens teilweise kompensiert werden,
   **dadurch gekennzeichnet, dass**
   die Ansteuerung der Kupplung nach einem Schaltwunsch verzögert wird, damit ein Wechsel der wirkenden Drehmomente an den zwei Antriebsachsen möglichst ohne einen Abfall und Anstieg der Zugkraft, und insbesondere ohne den damit verbundenen spürbaren Ruck, gewährleistet wird.

2. Vorrichtung nach Anspruch 1,
   **dadurch gekennzeichnet, dass**
   das Antriebssystem der ersten Achse während der Schaltvorgänge derart angesteuert wird, dass der Verlauf der Zugkraft während den Schaltvorgängen in vorgebbarer Weise erfolgt.

3. Vorrichtung nach Anspruch 2,
   **dadurch gekennzeichnet, dass**
   das Antriebssystem der ersten Achse während der Schaltvorgänge im Sinne einer hohen Zugkraft angesteuert wird

4. Vorrichtung nach Anspruch 2,
   **dadurch gekennzeichnet, dass**
   das Antriebssystem der ersten Achse während der Schaltvorgänge im Sinne eines geringen Einbruchs und Anstiegs der Zugkraft, insbesondere im Sinne eines geringen Schaltrucks, angesteuert wird.

5. Vorrichtung nach Anspruch 2
   **dadurch gekennzeichnet, dass**
   der Verlauf der Zugkraft während einem Schaltvorgang so erfolgt, dass Grenzwerte zur Änderung der Zugkraft nicht überschritten werden.

6. Vorrichtung nach Anspruch 2,
   **dadurch gekennzeichnet, dass**

der Verlauf der Zugkraft abhängig vom Fahrerwunsch erfolgt, wobei insbesondere vorgesehen ist, dass der Fahrerwunsch während der Schaltvorgänge erfasst wird.

7. Verfahren zur wenigstens teilweisen Kompensation von Zugkraftunterbrechungen während Schaltvorgängen bei Fahrzeugen mit

   • wenigstens zwei Antriebsachsen,
   • wenigstens einem Schaltgetriebe,
   wobei das Antriebssystem (106) der ersten Achse (103) so angesteuert wird, dass die bei einem Schaltvorgang (202) des Schaltgetriebes (102) an der zweiten Achse (104) auftretenden Zugkraftunterbrechungen wenigstens teilweise kompensiert (203) werden
   **dadurch gekennzeichnet dass**
   dass die Ansteuerung der Kupplung nach einem Schaltwunsch verzögern wird, damit ein Wechsel der wirkenden Drehmomente an den zwei Antriebsachsen möglichst ohne einen Abfall und Anstieg der Zugkraft, und insbesondere ohne dem damit verbundene spürbaren Ruck, gewährleistet wird.

## Claims

1. Device (105) for influencing the traction force during shift processes of a shift transmission (102) in vehicles (101) having

   • at least two drive axles (103, 104),
   • at least one shift transmission (102),
   • the drive system (106) of the first axle (103) being actuated during the shift processes such that the interruptions in traction force occurring at the second axle (104) during shift processes of the shift transmission (102) are at least partially compensated,
   **characterized in that**
   the actuation of the clutch after a shift demand is slowed in order that a changeover of the torques acting on the two drive axles is ensured as far as possible without a decrease and increase of the traction force, and in particular without the associated perceptible jerk.

2. Device according to Claim 1,
   **characterized in that**
   the drive system of the first axle is actuated during the shift processes such that the profile of the traction force during the shift processes is predefinable.

3. Device according to Claim 2,
   **characterized in that**
   the drive system of the first axle is actuated during the shift processes so as to attain a high traction force.

4. Device according to Claim 2,
   **characterized in that**
   the drive system of the first axle is actuated during the shift processes so as to attain a small drop and increase in the traction force, in particular so as to attain a small shift jerk.

5. Device according to Claim 2,
   **characterized in that**
   the profile of the traction force during a shift process is such that limit values for the change in traction force are not exceeded.

6. Device according to Claim 2,
   **characterized in that**
   the profile of the traction force is dependent on the driver demand, it being provided in particular that the driver demand is detected during the shift processes.

7. Method for at least partially compensating interruptions in traction force during shift processes in vehicles having

• at least two drive axles,

• at least one shift transmission,

the drive system (106) of the first axle (103) being actuated such that the interruptions in traction force occurring at the second axle (104) during a shift process (202) of the shift transmission (102) are at least partially compensated (203),

**characterized in that**

the actuation of the clutch after a shift demand is slowed in order that a changeover of the torques acting on the two drive axles is ensured as far as possible without a decrease and increase of the traction force, and in particular without the associated perceptible jerk.

**Revendications**

1. Dispositif (105) pour influencer la force de traction pendant des opérations de changement de vitesse d'une boîte de vitesses (102) dans des véhicules (101), comprenant :

   - au moins deux essieux d'entraînement (103, 104),
   - au moins une boîte de vitesses (102),
   - le système d'entraînement (106) du premier essieu (103) étant commandé pendant les opérations de changement de vitesse de telle sorte que les interruptions de la force de traction se produisant lors d'opérations de changement de vitesse de la boîte de vitesses (102) au niveau du deuxième essieu (104) soient au moins en partie compensées,

   **caractérisé en ce que**

   la commande de l'embrayage en fonction d'un souhait de changement de vitesse est retardée afin d'assurer un changement des couples agissant sur les deux essieux d'entraînement dans la mesure du possible sans chute ni augmentation de la force de traction, et notamment sans l'à-coup perceptible associé à celle-ci.

2. Dispositif selon la revendication 1,
   **caractérisé en ce que**
   le système d'entraînement du premier essieu est commandé pendant les opérations de changement de vitesse de telle sorte que l'allure de la force de traction soit prédéfinissable pendant les opérations de changement de vitesse.

3. Dispositif selon la revendication 2,
   **caractérisé en ce que**
   le système d'entraînement du premier essieu est commandé pendant les opérations de changement de vitesse dans le sens d'une grande force de traction.

4. Dispositif selon la revendication 2,
   **caractérisé en ce que**
   le système d'entraînement du premier essieu est commandé pendant les opérations de changement de vitesse dans le sens d'un faible effondrement et d'une faible augmentation de la force de traction, en particulier dans le sens d'un faible à-coup de changement de vitesse.

5. Dispositif selon la revendication 2,
   **caractérisé en ce que**
   l'allure de la force de traction pendant une opération de changement de vitesse est telle que des valeurs limites pour la variation de la force de traction ne soient pas dépassées.

6. Dispositif selon la revendication 2,
   **caractérisé en ce que**
   l'allure de la force de traction dépend du souhait du conducteur, et il est notamment prévu que le souhait du conducteur soit détecté pendant les opérations de changement de vitesse.

7. Procédé pour la compensation au moins en partie d'interruptions de la force de traction pendant des opérations de changement de vitesse dans des véhicules, comprenant :

   - au moins deux essieux d'entraînement,
   - au moins une boîte de vitesses,

- le système d'entraînement (106) du premier essieu (103) étant commandé de telle sorte que les interruptions de la force de traction se produisant lors d'une opération de changement de vitesse (202) de la boîte de vitesses (102) au niveau du deuxième essieu (104) soient au moins en partie compensées (203),

**caractérisé en ce que**

la commande de l'embrayage en fonction d'un souhait de changement de vitesse est retardée afin d'assurer un changement des couples agissant sur les deux essieux d'entraînement dans la mesure du possible sans chute ni augmentation de la force de traction, et notamment sans l'à-coup perceptible associé à celle-ci.

101

107

106    105

103                          108                104

102

**Fig. 1**

START — 201

202

203

END — 204

**Fig. 2**

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3542059 C1
- US 6319168 B
- US 2002055411 A
- DE 19919454
- US 20010003109 A
- EP 1327547 A
- EP 1393959 A